# EUROPÄISCHE PATENTSCHRIFT

(11) **EP 3 078 873 B1**
(45) Veröffentlichungstag und Bekanntmachung des Hinweises auf die Patenterteilung: **13.06.2018**
(21) Anmeldenummer: 16000790.2
(22) Anmeldetag: 06.12.2012
(51) Int. Cl.: F16D 25/08, F16D 48/02

(54) **ANSCHLUSSANORDNUNG MIT EINEM LEITUNGSADAPTER ZUM ANSCHLUSS EINER FLUIDLEITUNG AN EIN GEBER- ODER NEHMERZYLINDERGEHÄUSE**
CONNEXION ASSEMBLY WITH A LEAD ADAPTOR FOR CONNECTING A FLUID TUBE TO A MASTER CYLINDER OR SLAVE CYLINDER HOUSING
ASSEMBLAGE DE RACCORDEMENT AVEC UN ADAPTATEUR A RACCORDER A UNE CONDUITE DE FLUIDE SUR UN BOITIER DE CYLINDRE RECEPTEUR OU EMETTEUR

(30) Priorität: 26.01.2012 DE 102012201118; 26.01.2012 DE 102012201121; 26.01.2012 DE 102012201119; 29.06.2012 DE 102012211268
(43) Veröffentlichungstag der Anmeldung: 12.10.2016
(62) Teilanmeldung aus: 12821108.3
(73) Patentinhaber: Schaeffler Technologies AG & Co. KG, 91074 Herzogenaurach (DE)
(72) Erfinder: Ortmann, Simon, 06112 Halle (Saale) (DE)

(56) Entgegenhaltungen:
- DE-A1-102009 013 999
- DE-A1-102011 103 472
- FR-A1- 2 757 590

## Beschreibung

Die Erfindung bezieht sich auf eine Anschlussanordnung mit einem Leitungsadapter zum Anschluss einer Fluidleitung an ein Gehäuse, insbesondere an ein Gehäuse eines Geber- oder Nehmerzylinders für ein Ausrücksystem einer Kupplung für ein Kraftfahrzeug gemäß dem Oberbegriff des Anspruches 1.

Vorrichtungen zum Aus- bzw. Einrücken einer Kupplung sind in einer Vielzahl von Ausführungsformen im Stand der Technik bekannt. Insbesondere sind in den letzten Jahren sog. konzentrische Nehmerzylinder als Betätigungselement für eine Ausrückvorrichtung für eine Kupplung verwendet worden, bei denen ein Gehäuse konzentrisch um eine Achse angeordnet ist und einen ringförmigen Druckraum ausbildet, in dem ein ringförmiger Kolben geführt ist. Zur Betätigung der Kupplungen wird dann ein Fluid unter Druck in den Druckraum gepresst, so dass sich der Kolben, der sich über ein Ausrücklager an einer Teller- bzw. Hebelfeder einer Kupplung abstützt, zur Betätigung dieser Hebel- bzw. Tellerfeder aus dem Druckraum heraus bewegt. Eine derartige konzentrischer Nehmerzylinder kann in axialer und radialer Richtung über ein Deckellager am Kupplungsdeckel abgestützt sein, so dass Relativbewegungen zwischen der Kupplung und dem Ausrücker vermieden werden. Derart ausgebildete Ausrückvorrichtungen werden als deckelfeste Ausrücker bezeichnet.

Allerdings benötigen konzentrische Nehmerzylinder für die Führungslänge für den Ringkolben einen gewissen axialen Baumraum, der insbesondere bei modernen Kompakt- und Kleinwagen quer eingebautem Motor eng begrenzt ist. Insbesondere bei den oben beschriebenen deckelfesten Ausrückern muss dabei auch noch Bauraum für das Deckellager vorgesehen werden. Darüber hinaus ist die Montage des Deckellagers bei deckelfesten Ausrückern auf den Zylindergehäuse nach dem Stand der Technik aufwendig und kompliziert, da eine Lösung für die Anbindung der Druckleitung gefunden werden muss und gleichzeitig die Befestigung des Innenrings des Deckellagers am Gehäuse gewährleistet werden muss. Eine Ausrückvorrichtung weist ein Gehäuse auf, das konzentrisch um eine Achse angeordnet ist und einen ringförmigen Druckraum ausbildet. In diesem Druckraum ist axial beweglich ein Ringkolben angeordnet, der zum Druckraum hin mit einer Dichtung abgedichtet ist und so in Verbindung mit dem Gehäuse einen abgeschlossenen Druckraum, beispielsweise für ein hydraulisches Fluid, bildet. Am Druckraum abgewandten Ende des Ringkolbens befindet sich ein Ausrücklager, dass zur Anlage einen Teller- oder Hebelfeder einer Kupplung ausgebildet ist. Das Gehäuse ist über ein Deckellager axial und radiale am Kupplungsdeckel festgelegt. Dabei ist das Deckellager derart ausgebildet, dass der Innenring des Deckellagers einen Innendurchmesser aufweist, der größer als der Außendurchmesser des Außenrings des Ausrücklagers ist. Durch diese Ausführung ergibt sich die Möglichkeit, die Ausrückvorrichtung so auszubilden, dass das Ausrücklager während des Betätigungshobels ganz oder teilweise in den Innenring des Deckellagers eintritt oder sogar hindurchgeführt wird. Somit weist die Ausrückvorrichtung lediglich zwei bewegte bzw. drehende Teile auf, nämlich den Außenring des Ausrücklagers und den Außenring des Deckellagers. Dadurch ergibt sich die Möglichkeit, ein einfach am Gehäuse der Ausrückvorrichtung montierbares Deckellager zur Verfügung zu stellen. Gleichzeitig wird durch die radiale Schachtelung der Lager der axiale Bauraum verringert.

Weiterhin ergibt sich die Möglichkeit, das Ausrücklager mit einer Kugellaufbahn auszuführen, die einen Durchmesser größer des Druckraumdurchmessers des Gehäuses aufweist. Durch diese Abstufung der Durchmesser vom Druckraumgehäuse und Ausrücklager ist es möglich, das Ausrücklager derart auszubilden, dass es in der maximalen eingefahrenen Position des Ringkolbens zumindest teilweise über das Druckraumgehäuse geschoben ist, d. h., das Druckraumgehäuse tritt beim Verbringen des Kolbens in die eingefahrene Position, die sog. Min-Extension, in den Innenring des Ausrücklagers ein, so dass der Innenring und die Laufbahn der Wälzkörper des Ausrücklagers das Druckraumgehäuse zumindest teilweise umfassen. Durch diese Anordnung kann der axial notwendige Bauraum weiter reduziert werden, was, wie oben bereits erwähnt, insbesondere für quer eingebaute Motoren in Klein- und Kompaktwagen von großer Bedeutung ist.

Die Befestigung der Ausrückvorrichtung an der Kupplung erfolgt über den Außenring des Deckellagers. Diese weist Mittel zur Befestigung am Kupplungsdeckel auf, insbesondere Bohrungen zur Aufnahme von Verbindungsmitteln wie Nieten oder Schrauben.

Zudem ergibt sich auch die Möglichkeit, das Gehäuse der Ausrückvorrichtung aus Kunststoff auszuführen, was zu einer erheblichen Gewichtseinsparung beiträgt. Dabei kann die Zuführung des hydraulischen Fluids in dem Druckraum über einen Leitungsadapter erfolgen, der mit dem Gehäuse verbunden ist. Vorteilhaft kann auch dieser Leitungsadapter aus Kunststoff hergestellt sein.

Der Leitungsadapter ist mittels einer Nietverbindung zug- und momentenfest mit dem Gehäuse verbunden.

Am Deckellager kann ein Befestigungsflansch vorgesehen sein, der mittels einer Pressverbindung am Innenring des Deckellagers festgelegt ist. Über diesen Befestigungsflansch kann eine Befestigung des Deckellagers am Ausrücker bzw. Druckraumgehäuse erfolgen. Dabei kann für die Durchführung des Leitungsadapters eine Öffnung in Befestigungsflansch vorgesehen sein, durch die der Leitungsadapter vor oder nach Montage des Deckelflanschs am Druckraumgehäuse mit dem Druckraumgehäuse verbunden werden kann. Zur Transportsicherung des Befestigungsflanschs und mittelbar des Deckellagers am Druckraumgehäuse kann eine Verbindung des Befestigungsflansches mit dem Druckraumgehäuse mittels Klemmvorrichtungen, insbesondere mittels eines oder mehrerer Kunststoffbauteile mit Tannenzapfengeometrie vorgesehen werden. Diese Kunststoffbauteile werden durch Öffnungen in Befestigungsflansch geführt und unter Vorlast in komplementäre Öffnungen am Druckraumgehäuse gepresst, so dass eine formschlüssige Verbindung entsteht. Da das Druckraumgehäuse in montiertem Zustand von der Vorlastfeder, die sich über das Ausrücklager an der Tellerfeder der Kupplung abstützt, gegen den Befestigungsflansch gepresst wird, muss dabei die Transportsicherung im Einbauzustand keinerlei Kräfte übertragen, so dass die vergleichsweise geringe Festigkeit einer derartigen Tannenzapfverbindung für die Transportsicherungszwecke ausreichend ist.

Es ergibt sich die Möglichkeit, den Befestigungsflansch für den Ausrücker bzw. das Druckraumgehäuse integriert, d.h. einstückig mit dem Innenring des Ausrücklagers auszubilden. Anders ausgedrückt wird der Innenring des Deckellagers derart verlängert, dass eine direkte Befestigungsmöglichkeit für das Gehäuse des Ausrückers am Innenring geschaffen wird. Derart kann die notwendige Anzahl an Teilen weiter reduziert und die Montage vereinfacht werden. Zusätzlich ergibt sich durch die Vermeidung eines separaten Innenrings eine Reduzierung des notwendigen Innendurchmessers für das Deckellager, wodurch eine weitere Kostenersparnis möglich ist. Vorteilhaft kann der Flansch mit integrierter Laufbahn für die Wälzkörper des Deckellagers im Tiefziehverfahren ausgebildet werden. Alternativ sind natürlich auch andere, an sich für die Herstellung von Lagerringen bekannte Herstellungsverfahren möglich.

Die Erfindung bezieht sich auf eine Anschlussanordnung mit einem Leitungsadapter zum Anschluss einer Fluidleitung an ein Gehäuse, insbesondere zur Verwendung bei einem Geber- oder Nehmerzylinder eines Ausrücksystems einer Kupplung für ein Kraftfahrzeug gemäß Oberbegriff des Anspruchs 1.

Anschlüsse für Fluidleitungen an ein Gehäuse müssen bei hydraulischen System häufig vorgenommen werden. Insbesondere bei einer hydraulischen Kupplungsbetätigung für eine Kraftfahrzeugkupplung ergibt sich oftmals das Problem, dass ein von der Kupplung über das Ausrücklager auf den Nehmerzylinder übertragenes Schleppmoment abgestützt werden muss. Hierfür wird im Stand der Technik häufig die Anschlussleitung genutzt, so dass ein Bedarf für eine Verbindung zwischen Leitungsadapter und Gehäuse besteht, die nicht nur gegen Abziehen gesichert ist, sondern auch Momente übertragen kann.

Hierzu wird oftmals bei konzentrischen Nehmerzylindern die Anschlusspfeife einstückig mit dem Gehäuse gebildet und seitlich weggeführt, um derart das Schleppmoment abstützen zu können. Die Montage von Nehmerzylinder derartig ausgebildeten Anschlusspfeifen ist aber kompliziert, weil die weit abstehende Anschlusspfeife die Montage behindert. Darüber hinaus ist insbesondere bei sog. deckelfesten Ausrückern, d. h. Ausrückern mit Nehmerzylindern, die über ein Deckellager radial und axial am Kupplungsdeckel befestigt sind, ist es aufgrund der notwendigen Montage des Deckellagers am Ausrückergehäuse schwierig, eine einstückig gefertigte Anschlusspfeife vorzusehen. In der FR 2 745 616 A1 wird eine Nietverbindung zwischen einem Gehäuse und einem Befestigungsflansch gezeigt.

Es besteht daher die Aufgabe, eine Möglichkeit zur Anbindung eines Leitungsadapter an ein Gehäuse zur Verfügung zu stellen, die einfach und kostengünstig auszuführen ist und Zugkräfte sowie Momente aufnehmen kann. Die Lösung dieser Aufgabe gelingt mit der Anschlussanordnung gemäß Anspruch 1. Vorteilhafte Weiterbildung ergeben sich aus den Unteransprüchen. Bei einer Anschlussanordnung mit einem Leitungsadapter zum Anschluss einer Fluidleitung an ein Gehäuse, insbesondere an ein Gehäuse eines Geber- oder Nehmerzylinders für ein Ausrücksystem einer Kupplung für ein Kraftfahrzeug, wobei der Leitungsadapter mittels einer Nietverbindung zug- und momentenfest mit dem Gehäuse verbunden wird, wobei die Nietverbindung ohne Ausbildung einer Lochleibungskraft ausgeführt wird, sind erfindungsgemäß an dem Leitungsadapter oder an dem Gehäuse Vorsprünge angeordnet, in denen eine Bohrung gebildet ist, und das Gehäuse oder der Leitungsadapter weist zu den Vorsprüngen kompatible Öffnungen zum Einsetzen der Vorsprünge auf, wobei die Öffnungen die Vorsprünge im eingesetzten Zustand an wenigstens zwei gegenüberliegenden Seiten umschließen, und diese Seiten der Öffnungen Bohrungen aufweisen, die im eingeschobenen Zustand mit der Bohrung in den Vorsprüngen fluchten, und Niete zur Verbindung des Leitungsadapters und des Gehäuses durch die fluchtenden Bohrungen geschoben und an ihren Enden zur Bildung von Köpfen umgeformt sind.

Zur Bildung der Nietverbindung ist das oder die Niete nur im Kopfbereich umgeformt. Gemäß einem Ausführungsbeispiel sind an dem Leitungsadapter oder an dem Gehäuse Vorsprünge angeordnet, und das Gehäuse oder der Leitungsadapter weist zu den Vorsprüngen kompatible Öffnungen zum Einsetzen der Vorsprünge auf, wobei die Vorsprünge und/oder die Öffnungen mit Quetschrippen versehen sind, die beim Einsetzen der Vorsprünge zur Bildung eines Reibschlusses deformiert werden, und zusätzlich zu den Öffnungen und Vorsprüngen Bohrungen zur Aufnahme von Nieten an dem Leitungsadapter und dem Gehäuse vorgesehen sind.

Die Öffnungen zum Einsetzen der Vorsprünge sind vorzugsweise zungenartig ausgebildet. Weiterhin kann das Gehäuse einen Zapfen zum Einstecken in eine Leitungsöffnung des Leitungsadapters aufweisen.

Der Zapfen wiederrum weist bevorzugt eine Ringschulter auf, die als Dichtsitz für eine Dichtung zur Abdichtung der Verbindung zwischen Leitungsadapter und Gehäuse dient.

Leitungsadapter nach der vorliegenden Erfindung bestehen im Wesentlichen aus einem in Kunststoff ausgeführten, rohrförmigen Anschlussteil, das gerade oder gewinkelt ausgeführt sein kann, und einen Anschlussbereich zur Verbindung mit dem Gehäuse des Ausrückers. In diesem Anschlussbereich ist eine Dichtung oder ein Dichtsitz für eine komplementäre Dichtung am Gehäuse vorgesehen, mittels derer die Verbindung zwischen Gehäuse und Leitungsadapter fluiddicht ausgeführt wird. Die Verbindung zwischen dem Leitungsadapter und dem Gehäuse wird mittels eines oder mehrerer Nieten sichergestellt. Dabei wird der Nietvorgang derart ausgeführt, dass keine oder nur eine sehr geringe Verformung entlang des Nietstabes stattfindet, sondern lediglich die Endbereiche des Niets zur Bildung eines Kopfes umgeformt werden. Es entsteht somit durch den Nietvorgang in der Bohrung, durch die das Niet an Leitungsadapter und Gehäuse geführt wird, keine Lochleibungsspannung, vielmehr werden die einzelnen Teile durch den Formschluss der Nietköpfe miteinander verbunden. Eine Lochleibungsspannung tritt dabei erst auf, wenn die Verbindung durch äußere Kräfte wie Zug oder Moment belastet wird.

Zur Erhörung der Sicherheit der Verbindung kann es vorgesehen sein, dass ineinander greifende Elemente für zusätzliche mechanische Festigkeit an dem Gehäuse bzw. dem Leitungsadapter vorgesehen sind.

So kann es z. B. vorgesehen sein, dass vorspringende Elemente an einem Bauteil, beispielsweise dem Gehäuse, mit Bohrungen zur Aufnahme eines oder mehreren Nieten, vorgesehen sind, die entsprechend komplementäre Vorsprünge am jeweils anderen Bauteil, als beispielsweise dem Leitungsadapter, zangenartig zu umfassen und so die Verbindung verstärken, wobei der komplementäre Vorsprung ebenfalls eine oder mehrere Bohrungen für ein oder mehrere Nieten aufweist.

Alternativ oder zusätzlich kann es vorgesehen sein, die Verbindungsbereiche oder mit zusätzlichen Quetschrippen zu versehen, die beim Einsetzen der Bauteile ineinander deformiert werden und so für einen Reibschluss zwischen den Bauteilen sorgen. Selbstverständlich ist es auch möglich, zusätzliche Vorsprünge neben den eigentlichen, mit Nutbohrungen versehenen Verbindungsbereichen vorzusehen, die mit Quetschrippen versehen sind.

Ausrückvorrichtungen für Kupplungen im Antriebsstrang eines Kraftfahrzeugs sind im Stand der Technik in vielfältiger Ausführung bekannt. In den letzten Jahren sind jeweils zunehmend sog. konzentrische Nehmerzylinder zum Einsatz gekommen, bei denen ein Gehäuse konzentrisch um eine Welle, beispielsweise die Getriebeeingangswelle, angeordnet ist und einen ringförmigen Druckraum bildet, in den ein ringförmiger Kolben axial verlagerbar angeordnet ist. Der Kolben trägt auf seinem Druckraum abgewandten Ende ein Ausrücklager, das an der Teller- oder Hebelfeder einer Kupplung anliegt. Durch Anpressen von hydraulischen Fluid in den Druckraum wird der Kolben dann aus dem Druckraum hinausbewegt und betätigt die Teller- bzw. Hebelfeder der Kupplung.

Eine Ausführungsform der konzentrischen Nehmerzylinder ist der sog. deckelfeste Ausrücker, bei dem das Nehmerzylindergehäuse über ein Deckellager axial und radial am Deckel der Kupplung festgelegt ist. Da sich der Kupplungsdeckel mit der Kupplung mitdreht, ist dieses Deckellager nötig, um das Ausrückergehäuse drehfest lagern zu können. Da aber über ein Drehlager immer auch ein Schleppmoment übertragen wird, greift an den Ausrückergehäuse bei Betrieb des Antriebsstrangs immer ein Drehmoment an, das in ein feststehendes Bauteil, beispielsweise die Getriebeglocke, abgeleitet werden muss. Hierzu ist es im Stand der Technik häufig vorgesehen, in der Getriebeglocke ein entsprechendes Abstützungselement vorzusehen, das die Fluidleitung zum Gehäuse in tangentialer Richtung bezüglich der Achse abstützt. Problematisch ist dabei, dass beim Auftreten eines unvorhergesehenen starken Schleppmoments die Zuleitung beschädigt werden kann, was zum Versagen des Ausrücksystems führen kann.

Eine nicht erfindungsgemäße Vorrichtung zum Ausrücken einer Kupplung weist ein Gehäuse auf, das konzentrisch um eine Achse angeordnet ist und einen Druckraum ausbildet, in dem axial beweglicher Ringkolben angeordnet ist, wobeidas Gehäuse über ein Deckellager an einem Kupplungsdeckel abgestützt ist, eine Zuleitung für die Zuführung eines hydraulischen Fluidsmit dem Gehäuse verbunden ist und als Überlastschutz ein Blech drehfest mit dem Gehäuse verbunden ist, das einen Kragarm parallel zur Zuleitung aufweist und an dem Kragarmende wenigstens ein Haltearm zur Abstützung der Zuleitung gegen Momentenbelastung aufweist.

Es besteht dabei die Möglichkeit, das Blech mit einem Ringbereich auszustatten, der konzentrisch um die Achse und axial anliegend an das Gehäuse angeordnet ist. Von diesem Ring kann sich der Kragarm radial, tangential oder als Sekante erstrecken. Ebenso ist es möglich, dass der Kragarm im Verlauf seiner Erstreckung in radiale oder axiale Richtung gewinkelt ist.

Es ergibt sich auch die Möglichkeit, das sich mittels Vorsprüngen oder Vertiefungen im Ringbereich, die in komplementäre Vertiefungen oder Vorsprünge an dem Gehäuse eingreifen, in einen Formschluss mit dem Gehäuse zur Drehmomentabstützung auszubilden. Die axiale Festlegung des Blechs am Gehäuse kann dabei mit Klemm- oder Pressverbindungen zur Transportsicherung erfolgen.

Weitere Vorteile, Merkmale, Merkmalskombinationen und Eigenschaften der Erfindung werden nachfolgend erläutert anhand eines Ausführungsbeispiels und der Zeichnungen.

Diese zeigen in
Figur 1 ein Schnitt durch eine nicht erfindungsgemäße Ausrückvorrichtung
Figur 2 die Ausrückvorrichtung aus Figur 1 in endmontierter Position an einer Reibungskupplung
Figur 3 ein Detail der Ausrückvorrichtung aus Figur 2
Figur 4 die Transportsicherung zwischen dem Befestigungsflansch und Druckraumgehäuse der Ausrückvorrichtung aus den Figuren 2 und 3 im Detail
Figur 5 eine alternative Ausführungsform mit einem Innenring des Deckellagers, der einstückig mit dem Befestigungsflansch für das Ausrückergehäuse ausgebildet ist
Figur 6 einen Schnitt durch den Verbindungsbereich zwischen Gehäuse und Leitungsadapter mit Nietverbindung gemäß einer ersten Ausführungsform
Figur 7 ein Leitungsadapter mit einem Verbindungsbereich gemäß einer zweiten Ausführungsform
Figur 8 ein zu dem Leitungsadapter aus Figur 7 kompatibles Ausrückergehäuse mit einem passenden Verbindungsbereich
Figur 9 ein Leitungsadapter mit einem Verbindungsbereich gemäß Figur 6
Figur 10 ein Detail aus dem Leitungsadapter aus Figur 9
Figur 11 ein zum Leitungsadapter aus Figur 9 kompatibles Gehäuse mit entsprechendem Verbindungsbereich
Figur 12 ein nicht erfindungsgemäßes Blechteil zur Drehmomentabstützung bei einem konzentrischen Nehmerzylinder
Figur 13 das Überlastschutzblech aus Figur 12 in montierter Position an einer Ausrückvorrichtung

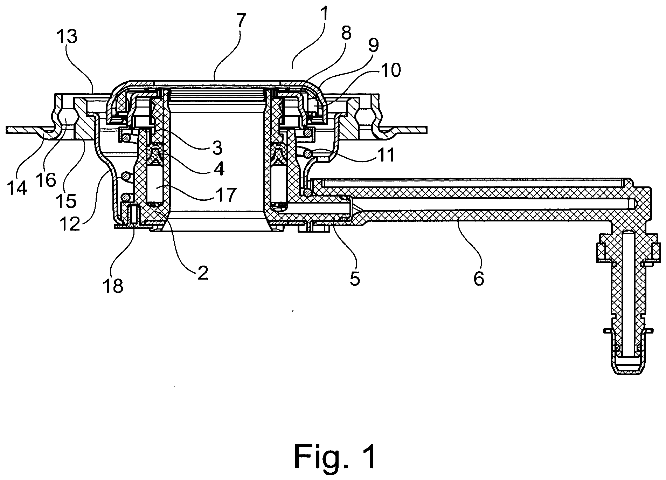

Figur 1 zeigt eine Ausrückvorrichtung 1, die ein Gehäuse 2 aufweist, in dem axial verschieblich ein Ringkolben 3 gelagert ist. Über die Dichtung 4 wird ein abgedichteter Druckraum 17 gebildet, der zur Aufnahme eines hydraulischen Fluids ausgebildet ist. Ein Anschlussbereich 5 am Gehäuse 2 ist zur Verbindung mit einem Leitungsadapter 6 ausgebildet über den das hydraulische Fluid in den Druckraum 17 zugeführt wird. Am Druckraum abgewandten Ende des Kolbens 3 ist ein Ausrücklager 7 festgelegt, das zur Anlage an einer Tellerfeder ein Fahrzeugkupplung ausgebildet ist. Dazu weist das Ausrücklager einen Innenring 8 und einen Außenring 9 auf, zwischen dem Wälzkörper, beispielsweise Kugeln, in einer Laufbahn geführt sind. Der Außenring 9 weist eine Anlagefläche zur Anlage der Tellerfederenden auf, während der Innenring 8 über an sich bekannte Haltemittel mit dem Kolben 3 verbunden ist. Der Kolben 3 befindet sich dabei in einer ausgefahrenen Position, wobei das Ausrücklager 7 teilweise im Innenring 15 des Deckellagers 13 angeordnet ist.

Zwischen dem Ausrücklager 7 und dem Druckraumgehäuse 2 befindet sich die Vorlastfeder 11, mittels derer das Ausrücklager unter Vorlast gegen die Tellerfeder der Kupplung gedrückt wird. Über den Befestigungsflansch 12, der mittels des Befestigungsbauteils 18 am Gehäuse 2 festgelegt, wird das Deckellager 13 mit dem Druckraumgehäuse 2 verbunden. Der Befestigungsflansch 12 ist mittels einer Pressverbindung am Innenring 15 des Deckellagers gehalten, zwischen dem Innenring 15 und dem Außenring 14 befinden sich auch beim Deckellager Wälzkörper, die für eine Verdrehbarkeit des Lagers sorgen.

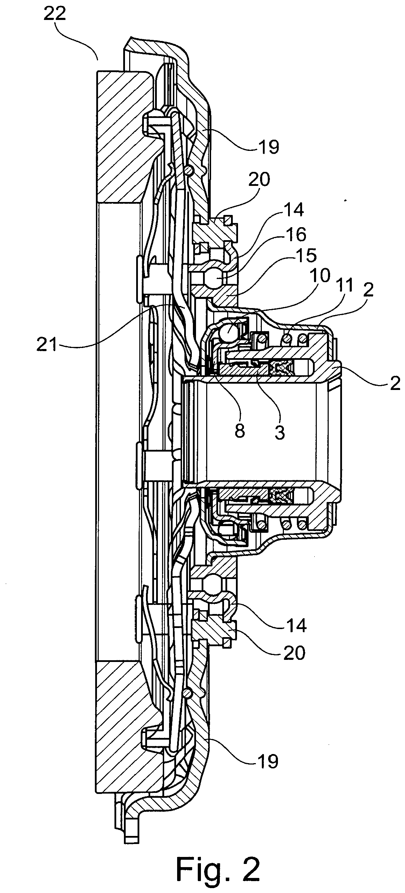

Figur 2 zeigt die Ausrückvorrichtung aus Figur 1 in der montierten Position an einer Kupplung 22. Der Kupplungsdeckel 19 verfügt über Öffnungen für Befestigungsmittel. Der Außenring 14 des Deckellagers weist komplementäre Öffnungen auf, so dass über Niete 20 eine Verbindung zwischen Kupplungsdeckel 19 und Deckellageraußenring 14 hergestellt werden kann. Selbstverständlich können auch andere Verbindungsmittel wie Schrauben, Schweißen, Klemmen etc. zur Verbindung des Außenrings des Deckellagers mit den Kupplungsdeckel genutzt werden. Die Tellerfederzungen 21 liegen, wie in Figur 2 zu erkennen, auf dem Außenring 9 des Ausrücklagers auf. Der Kolben 3 ist in Figur 2 in einer eingefahrenen Position gezeigt, in der das Ausrücklager 7, insbesondere die Wälzkörper 10, teilweise über das Gehäuse 2 geschoben sind.

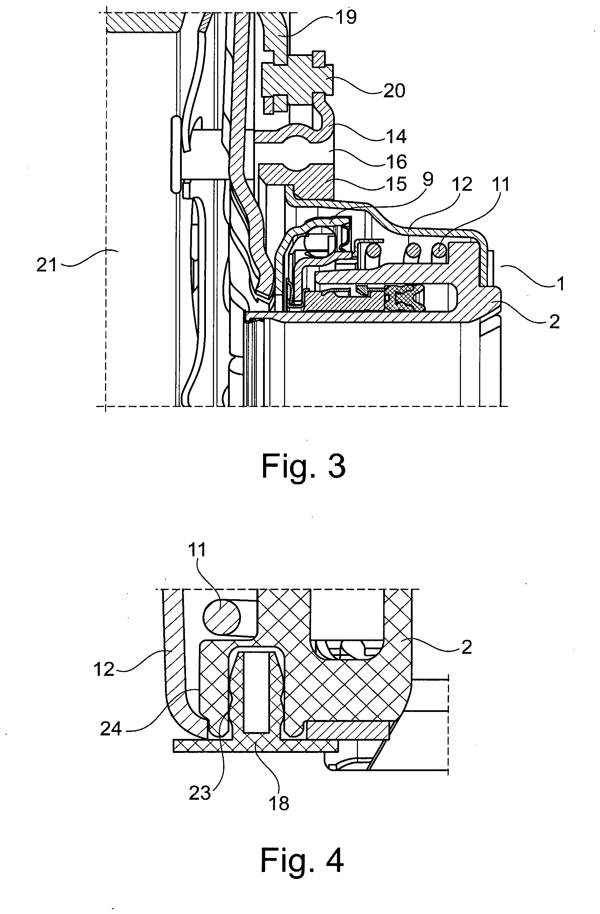

Figur 3 zeigt die Befestigung der Ausrückvorrichtung 1 aus Figur 2 an der Kupplung im Detail. Das Deckellager 13 ist über den Außenring 14 mittels Nieten 20 am Kupplungsdeckel 19 festgelegt. Tellerfederzungen 21 liegen auf dem Außenring 9 des Ausrücklagers auf.

In Figur 4 ist die Befestigung des Befestigungsflanschs 12 am Gehäuse 2 im Detail dargestellt. Das Befestigungsteil 18 greift mit der Tannenzapfengeometrie 23 in die Öffnung 24 am Druckraumgehäuse 2 ein, so dass Reibschluss zwischen dem Befestigungsbauteil 18 und dem Gehäuse 2 die Folge ist. Über den Kopf des Befestigungsbauteils 18 wird der Befestigungsflansch 12 formschlüssig am Gehäuse 2 gehalten. Somit ist die Transportsicherung des Befestigungsflansches 12 und damit des Deckellagers am Gehäuse 2 sichergestellt.

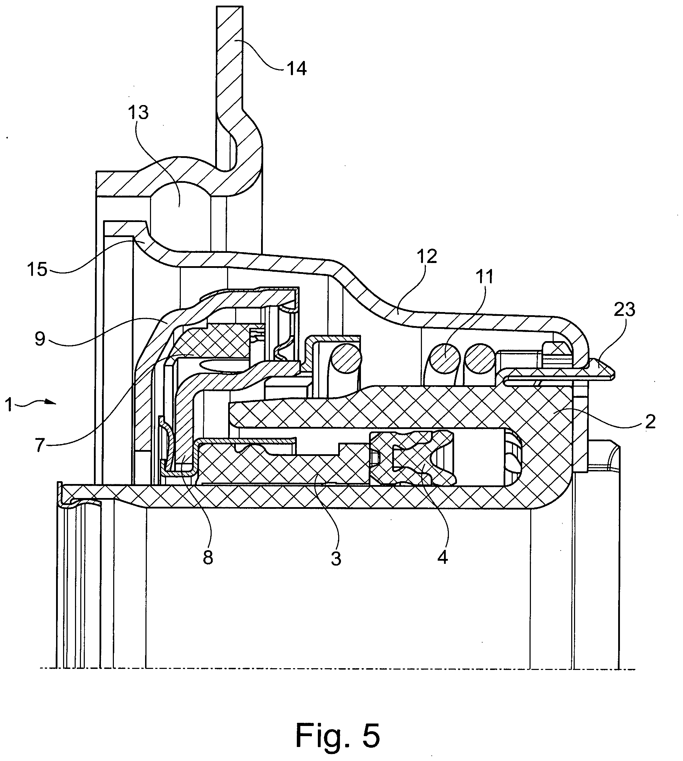

Figur 5 zeigt eine alternative Ausführungsform. Der Befestigungsflansch 12, an dem das Gehäuse 2 des Ausrückers 1 angeordnet ist, ist hier einstückig mit dem Innenring 15 des Deckellagers 13 ausgebildet. Zur Verbindung des Gehäuses 2 mit dem Befestigungsflansch 12 kommt bei dieser Ausführungsform eine Clipsverbindung zum Einsatz, bei der Clipse 23 am Gehäuse durch komplementäre Öffnungen im Befestigungsflansch eingreifen und dort verrasten. Selbstverständlich ist abweichend hiervon auch eine Befestigung des Gehäuses 2 mittels separaten Befestigungsteilen wie in Figur 1-4 gezeigt möglich, ebenso wie die Befestigungsvariante mittels Clipsen auch bei der Ausführungsform in den Figuren 1-4 verwendet werden kann. Die übrige Ausbildung der Ausführungsform in Figur 5 entspricht der in den Figuren 1-4 gezeigten.

Vorteilhaft kann der einstückige Lagerflansch mit Innenring in Figur 5 mittels an sich bekannter Umformverfahren aus Metall, insbesondere Stahlblech gefertigt werden. Hierzu bietet sich beispielsweise eine Fertigung im Tiefziehverfahren an. Es sind aber auch abweichende Herstellverfahren denkbar.

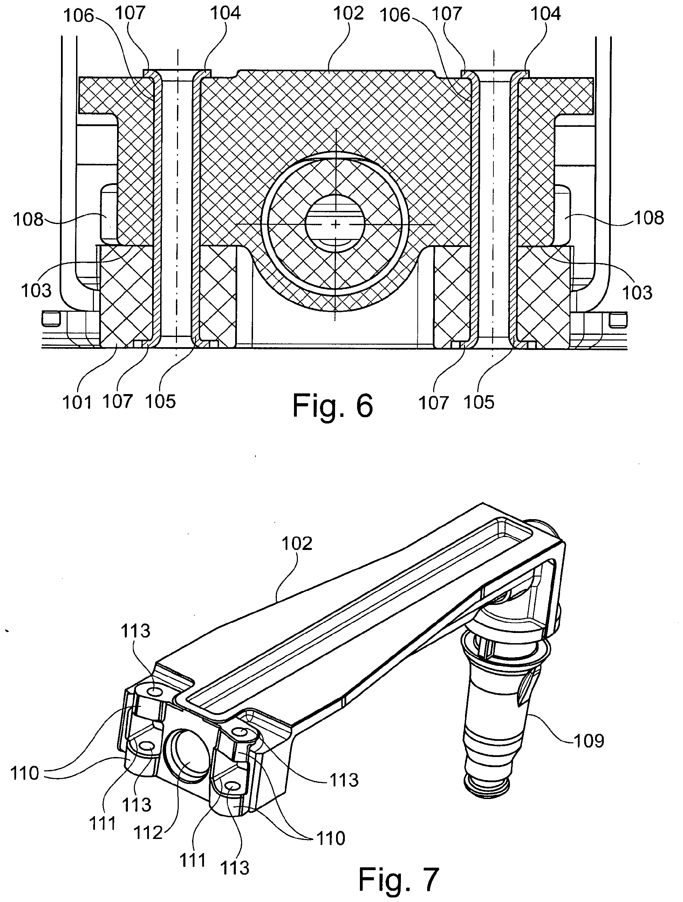

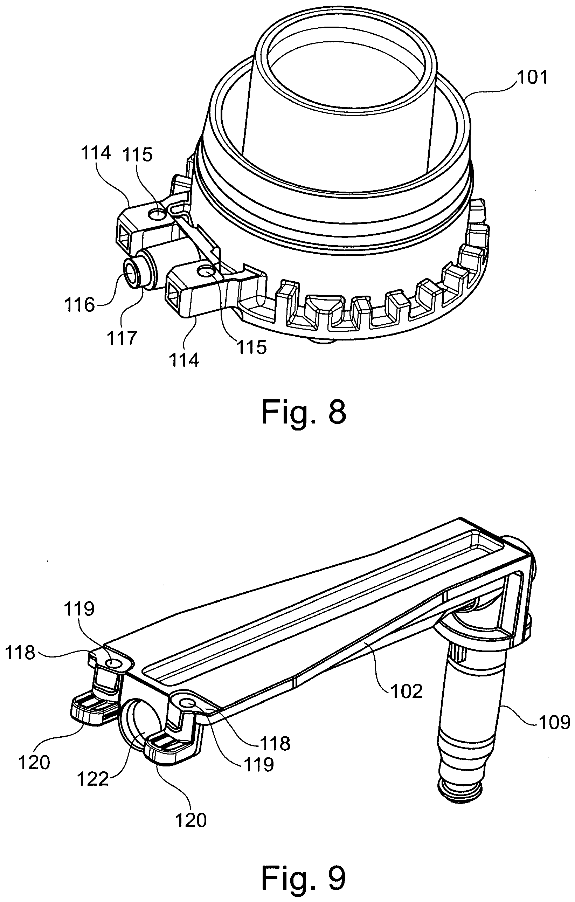

Figur 6 zeigt den Verbindungsbereich zwischen einem Gehäuse 101 und einem Leitungsadapter 102. Die Verbindungsbereiche liegen im Bereich 103 aneinander an und sind durch Niete 104 miteinander formschlüssig verbunden. Die Bohrungen 105 im Gehäuse 101 und 106 im Leitungsadapter sind so ausgeführt, dass die Niete nach den ausbildeten Nietverbindung zwängungsfrei in den Bohrungen sind. Die Endbereiche 107 der Niete sind umgebördelt, um so einen Nietkopf zu bilden und die formschlüssige Verbindung sicherzustellen. In die Vertiefungen 108 am Gehäuse 101 greifen komplementäre Vorsprünge des Leitungsadapters 102 mit Quetschrippen ein (siehe Figuren 9 bis 11).

Figur 7 zeigt einen Leitungsadapter, der ebenfalls eine Ausführungsform der Erfindung darstellt. Der Leitungsadapter 102 weist einen Anschlussbereich 109 auf, der zum Anschluss einer Fluidleitung (nicht gezeichnet) ausgebildet ist. Im Verbindungsbereich zum Gehäuse befinden sich Nietlaschen 110, die zungenartig Öffnungen 111 umfassen, die zum Einführen von komplementären Laschen am Gehäuse (siehe Figur 8) ausgebildet sind. In den Laschen 110 befinden sich Bohrungen 113, durch die Nieten hindurchgeführt werden können. In die Leitungsöffnung 112 wird ein Anschlusszapfen am Gehäuse eingeführt.

Das Gehäuse 101 in Figur 8 weist einen zum Leitungsadapter in Figur 7 kompatiblen Verbindungsbereich mit Vorsprüngen 114 auf, die Bohrungen 115 zum Hindurchführen der Niete aufweisen. Der Zapfen 116 ist zum Einstecken in die Leitungsöffnung 112 des Leitungsadapters 102 aus Figur 7 ausgebildet und weist eine Ringschulter 117 auf, die als Dichtsitz für eine Dichtung zur Abdichtung der Verbindung dient.

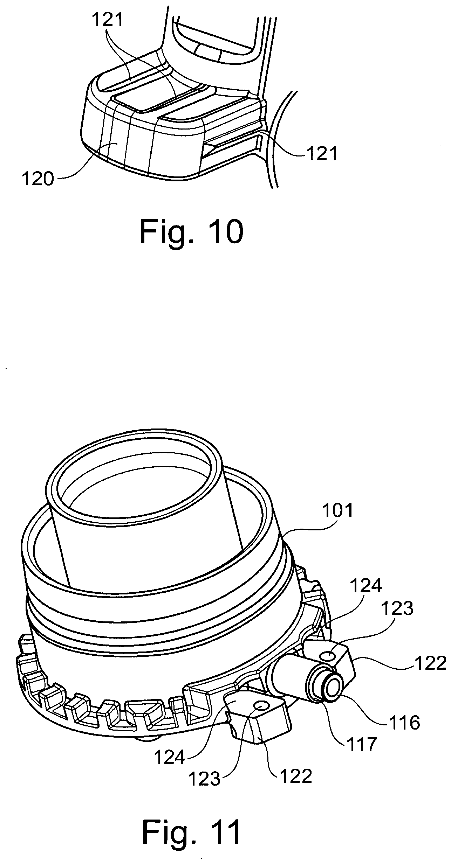

Figur 9 zeigt einen Leitungsadapter der Ausführungsform nach Figur 6 in einer Gesamtdarstellung. Die Verbindungsbereiche 118 sind mit Bohrungen 119 zur Aufnahme der Niete versehen. Vorsprünge 120 mit Quetschrippen (siehe Figur 10) sind neben der Leitungsöffnung 112 vorgesehen, die in komplementäre Öffnungen am Gehäuse 101 eingeschoben werden können. An den Vorsprüngen 120 befinden sich, wie in Figur 10 erkennbar, Quetschrippen 121, die beim Einschieben die komplementären Öffnungen 124 (siehe Figur 11) des Gehäuses 101 deformiert werden und so für einen Reibschluss zwischen Gehäuse 101 und Leitungsadapter 102 sorgen.

In Figur 11 ist am Gehäuse 101 ein Verbindungsbereich ausgebildet, der Vorsprünge 122 mit Bohrungen 123 zur Aufnahme von Nieten aufweist. Oberhalb der Vorsprünge 123 befinden sich Vertiefungen 124, die komplementär zu den Vorsprüngen 120 am Leitungsadapter ausgebildet sind und in Verbindung mit den Quetschrippen 121 an den Vorsprüngen 120 eine reibschlüssige Verbindung zwischen Gehäuse 101 und Leitungsadapter 102 zur Verfügung stellen. Der Zapfen 116 mit der Ringschulter 117 dient wieder zur Herstellung der dichten Verbindung zwischen Leitungsadapter und Gehäuse.

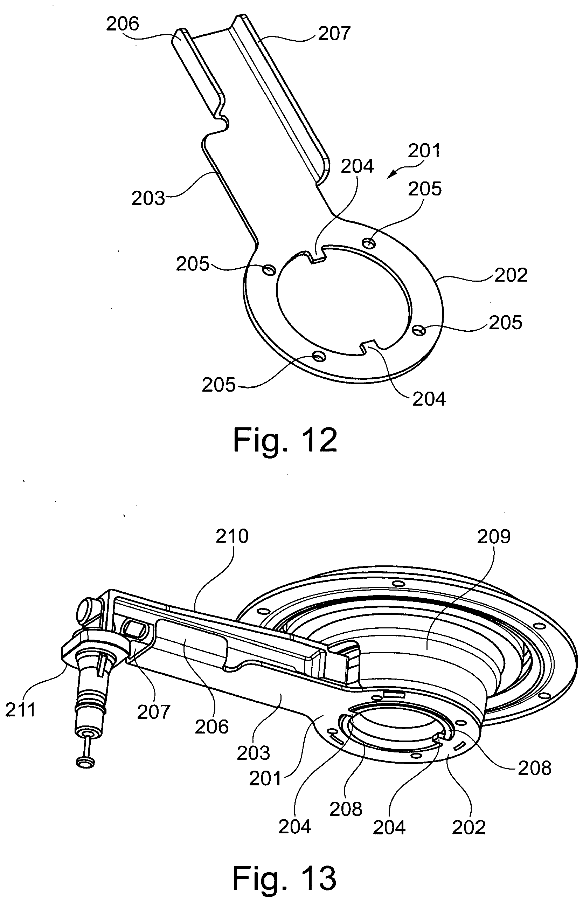

Eine Überlastschutzvorrichtung 201 gemäß Figur 12 weist einen Ringbereich 202 auf, von dem sich ein Kragarmbereich 203 erstreckt. Am Ringbereich 202 befinden sich Vorsprünge 204, die zum Eingriff in komplementäre Nuten oder Vertiefungen am Gehäuse eines Ausrückers (siehe Figur 13) ausgebildet sind. Bohrungen 205 sind für Befestigungen für die Transportsicherung am Ausrücker vorgesehen. Der Kragarm weist seitlich hochgebogene Flanken 206 und 207 auf, die am Kragarmende ein U-förmiges Profil bilden, in das die Zuleitung der Ausrückvorrichtung eingelegt werden kann.

In Figur 202 ist der Überlastschutz aus Figur 12 in montierter Position an einen Ausrücker 209 dargestellt. Der Ringbereich 202 des Überlastschutzblechs 201 dabei in axialer Richtung konzentrisch zur gemeinsamen Achse am Ausrückergehäuse festgelegt. Das Ausrückergehäuse weist Teilringe 208 auf, die sich durch das Ringinnere des Ringteils des Überlastschutzblechs erstrecken, wobei zwischen den Teilringen 208 Unterbrechungen bestehen, in die die Vorsprünge 204 des Ringbereichs 202 eingreifen, um derart eine Verdrehsicherung des Überlastschutzblechs 201 relativ zum Ausrückergehäuse 209 zu bilden. Ein auf das Überlastschutzblech 201 aufgebrachtes Drehmoment wird also über die Vorsprünge 204 und die Teilringe 208 am Gehäuse 209 des Ausrückers abgestützt. Vom Ringbereich 202 weg erstreckt sich der Kragarm Teil 203, der im Wesentlichen parallel zur Zuleitung 210 des Ausrückers angeordnet ist. Im U-förmigen Bereich am Ende des Kragarms, der durch die Hochbiegungen 206 und 207 gebildet wird, ist die Zuleitung 210 zumindest teilweise eingelegt, sodass bei einer auftretenden Momentenbelastung auf die Zuleitung sich diese zunächst leicht verformen kann, bis sie zur Anlage an den Halteblechen 206 oder 207 gelangt und derart gegen eine weitere Verbiegung abgestützt wird. Über das Abstützelement 211 wird die Zuleitung zur Schleppmomentabstützung an der Getriebeglocke (nicht gezeichnet) abgestützt.

### Bezugszeichenliste

- 1: Ausrückvorrichtung
- 2: Gehäuse
- 3: Ringkolben
- 4: Dichtung
- 5: Anschlussbereich
- 6: Leitungsadapter
- 7: Ausrücklager
- 8: Innenring
- 9: Außenring
- 11: Vorlastfeder
- 12: Befestigungsflansch
- 13: Deckellager
- 14: Außenring
- 15: Innenring
- 18: Befestigungsbauteil
- 19: Kupplungsdeckel
- 20: Niete
- 21: Tellerfederzunge
- 23: Halteclipse
- 101: Gehäuse
- 102: Leitungsadapter
- 103: Bereich
- 104: Niete
- 105: Bohrungen
- 107: Endbereiche
- 108: Vertiefungen
- 109: Anschlussbereich
- 110: Nietlaschen
- 111: zungenartige Öffnungen
- 112: Leitungsöffnungen
- 113: Bohrungen
- 114: Vorsprünge
- 115: Bohrungen
- 116: Zapfen
- 117: Ringschulter
- 118: Verbindungsbereiche
- 119: Bohrungen
- 120: Vorsprünge
- 121: Quetschrippen
- 122: Vorsprünge
- 123: Bohrungen
- 124: Vertiefungen
- 201: Überlastschutzvorrichtung
- 202: Ringbereich
- 203: Kragarmbereich
- 204: Vorsprünge
- 205: Bohrungen
- 206: hochgebogene Flanken
- 207: hochgebogene Flanken
- 208: Teilringe
- 209: Ausrückergehäuse
- 210: Zuleitung
- 211: Abstützelement

## Patentansprüche

1. Anschlussanordnung mit einem Leitungsadapter zum Anschluss einer Fluidleitung an ein Gehäuse (101), insbesondere an ein Gehäuse eines Geber- oder Nehmerzylinders für ein Ausrücksystem einer Kupplung für ein Kraftfahrzeug, wobei der Leitungsadapter (102) mittels einer Nietverbindung (104) zug- und momentenfest mit dem Gehäuse (101) verbunden wird, wobei die Nietverbindung (104) ohne Ausbildung einer Lochleibungskraft ausgeführt wird, **dadurch gekennzeichnet, dass** an dem Leitungsadapter (102) oder an dem Gehäuse (101) Vorsprünge (114, 120) angeordnet sind, in denen eine Bohrung (115, 119) gebildet ist, und das Gehäuse (101) oder der Leitungsadapter (102) zu den Vorsprüngen (114, 120) kompatible Öffnungen zum Einsetzen der Vorsprünge (114, 120) aufweist, wobei die Öffnungen die Vorsprünge (114, 120) im eingesetzten Zustand an wenigstens zwei gegenüberliegenden Seiten umschließen, und diese Seiten der Öffnungen Bohrungen (113) aufweisen, die im eingeschobenen Zustand mit der Bohrung (115, 119) in den Vorsprüngen (114, 120) fluchten, und Niete (104) zur Verbindung des Leitungsadapters (102) und des Gehäuses (101) durch die fluchtenden Bohrungen (113, 115, 119) geschoben und an ihren Enden zur Bildung von Köpfen umgeformt sind.

2. Anschlussanordnung nach Anspruch 1, **dadurch gekennzeichnet, dass** zur Bildung der Nietverbindung (104) das oder die Niete nur im Kopfbereich umgeformt sind.

3. Anschlussanordnung nach Anspruch 1 oder 2, **dadurch gekennzeichnet, dass** an dem Leitungsadapter (102) oder an dem Gehäuse (101) Vorsprünge (114, 120) angeordnet sind, und das Gehäuse (101) oder der Leitungsadapter (102) zu den Vorsprüngen (114, 120) kompatible Öffnungen zum Einsetzen der Vorsprünge (114, 120) aufweist, wobei die Vorsprünge (114, 120) und/oder die Öffnungen mit Quetschrippen (121) versehen sind, die beim Einsetzen der Vorsprünge (114, 120) zur Bildung eines Reibschlusses deformiert werden, und zusätzlich zu den Öffnungen und Vorsprüngen (114, 120) Bohrungen zur Aufnahme von Nieten an dem Leitungsadapter (102) und dem Gehäuse (101) vorgesehen sind.

4. Anschlussanordnung nach einem der vorangehenden Ansprüche, **dadurch gekennzeichnet, dass** die Öffnungen zum Einsetzen der Vorsprünge (114, 120) zungenartig ausgebildet sind.

5. Anschlussanordnung nach einem der vorangehenden Ansprüche, **dadurch gekennzeichnet, dass** das Gehäuse (101) einen Zapfen (116) zum Einstecken in eine Leitungsöffnung (112) des Leitungsadapters (102) aufweist.

6. Anschlussanordnung nach Anspruch 5, **dadurch gekennzeichnet, dass** der Zapfen eine Ringschulter (117) aufweist, die als Dichtsitz für eine Dichtung zur Abdichtung der Verbindung zwischen Leitungsadapter (102) und Gehäuse (101) dient.

7. Anschlussanordnung nach einem der vorangehenden Ansprüche, **dadurch gekennzeichnet, dass** der Leitungsadapter (102) aus Kunststoff ausgebildet ist.

## Claims

1. Connector arrangement having a line adapter for the connection of a fluid line to a housing (101), in particular to a housing of a master or slave cylinder for a release system of a clutch for a motor vehicle, wherein the line adapter (102) is connected in tension-resistant and torque-resistant fashion to the housing (101) by means of a rivet connection (104), wherein the rivet connection (104) is formed without the generation of a force on the face of a hole, **characterized in that**, on the line adapter (102) or on the housing (101), there are arranged projections (114, 120) in which a bore (115, 119) is formed, and the housing (101) or the line adapter (102) has openings which are compatible with the projections (114, 120) and which serve for the insertion of the projections (114, 120), wherein the openings enclose the projections (114, 120), in the inserted state, at at least two opposite sides, and said sides of the openings have bores (113) which, in the inserted state, are aligned with the bore (115, 119) in the projections (114, 120), and rivets (104) for the connection of the line adapter (102) and the housing (101) are pushed through the aligned bores (113, 115, 119) and are deformed at their ends so as to form heads.

2. Connector arrangement according to Claim 1, **characterized in that**, to form the rivet connection (104), the one or more rivets are deformed only in the head region.

3. Connector arrangement according to Claim 1 or 2, **characterized in that** projections (114, 120) are arranged on the line adapter (102) or on the housing (101), and the housing (101) or the line adapter (102) has openings which are compatible with the projections (114, 120) and which serve for the insertion of the projections (114, 120), wherein the projections (114, 120) and/or the openings are equipped with pinch ribs (121) which, during the insertion of the projections (114, 120), are deformed so as to generate a frictionally locking action, and in addition to the openings and projections (114, 120), bores for receiving rivets are provided on the line adapter (102) and on the housing (101).

4. Connector arrangement according to one of the preceding claims, **characterized in that** the openings which serve for the insertion of the projections (114, 120) are of tongue-like form.

5. Connector arrangement according to one of the preceding claims, **characterized in that** the housing (101) has a peg (116) for insertion into a line opening (112) of the line adapter (102).

6. Connector arrangement according to Claim 5, **characterized in that** the peg has a ring-shaped shoulder (117) which serves as a sealing seat for a seal for sealing the connection between line adapter (102) and housing (101).

7. Connector arrangement according to one of the preceding claims, **characterized in that** the line adapter (102) is formed from plastic.

## Revendications

1. Assemblage de raccordement avec un adaptateur de conduite à raccorder à une conduite de fluide sur un boîtier (101), en particulier sur un boîtier d'un cylindre émetteur ou récepteur pour un système de débrayage d'un embrayage pour un véhicule automobile, dans lequel l'adaptateur de conduite (102) est assemblé au boîtier (101) d'une façon résistant à la traction et à un couple au moyen d'un assemblage riveté (104), dans lequel l'assemblage riveté (104) est exécuté sans production d'un effort diamétral, **caractérisé en ce que** des saillies (114, 120) sont disposées sur l'adaptateur de conduite (102) ou sur le boîtier (101), dans lesquelles un trou (115, 119) est formé, et le boîtier (101) ou l'adaptateur de conduite (102) présente des ouvertures compatibles avec les saillies (114, 120) pour l'engagement des saillies (114, 120), dans lequel les ouvertures entourent les saillies (114, 120) sur au moins deux côtés opposés dans l'état engagé, et ces côtés des ouvertures présentent des trous (113), qui dans l'état engagé sont en alignement avec le trou (115, 119) dans les saillies (114, 120), et des rivets (104) sont introduits à travers les trous alignés (113, 115, 119) pour l'assemblage de l'adaptateur de conduite (102) et du boîtier (101) et sont déformés à leurs extrémités pour former des têtes.

2. Assemblage de raccordement selon la revendication 1, **caractérisé en ce que** le ou les rivet(s) n'est/ne sont déformé(s) que dans la région de tête pour la formation de l'assemblage riveté (104).

3. Assemblage de raccordement selon la revendication 1 ou 2, **caractérisé en ce que** des saillies (114, 120) sont disposées sur l'adaptateur de conduite (102) ou sur le boîtier (101), et le boîtier (101) ou l'adaptateur de conduite (102) présente des ouvertures compatibles avec les saillies (114, 120) pour l'engagement des saillies (114, 120), dans lequel les saillies (114, 120) et/ou les ouvertures sont munies de nervures à écraser (121), qui sont déformées lors de l'engagement des saillies (114, 120) afin de former un assemblage à friction, et il est prévu sur l'adaptateur de conduite (102) et le boîtier (101), en plus des ouvertures et des saillies (114, 120), des trous destinés à recevoir des rivets.

4. Assemblage de raccordement selon l'une quelconque des revendications précédentes, **caractérisé en ce que** les ouvertures destinées à l'engagement des saillies (114, 120) sont réalisées à la manière de languettes.

5. Assemblage de raccordement selon l'une quelconque des revendications précédentes, **caractérisé en ce que** le boîtier (101) présente un embout (116) à engager dans une ouverture de conduite (112) de l'adaptateur de conduite (102).

6. Assemblage de raccordement selon la revendication 5, **caractérisé en ce que** l'embout présente un épaulement annulaire (117), qui sert de siège d'étanchéité pour un joint d'étanchéité pour l'étanchéité de l'assemblage entre l'adaptateur de conduite (102) et le boîtier (101).

7. Assemblage de raccordement selon l'une quelconque des revendications précédentes, **caractérisé en ce que** l'adaptateur de conduite (102) est réalisé en matière plastique.
